# EUROPÄISCHE PATENTSCHRIFT

(11) **EP 1 862 754 B1**
(45) Veröffentlichungstag und Bekanntmachung des Hinweises auf die Patenterteilung: **30.05.2012**
(21) Anmeldenummer: 07010858.4
(22) Anmeldetag: 01.06.2007
(51) Int. Cl.: F28F 3/12, F28F 21/06

(54) **Wärmetausch-Einrichtung**
Heat exchange device
Dispositif d'échange thermique

(30) Priorität: 01.06.2006 AT 9532006
(43) Veröffentlichungstag der Anmeldung: 05.12.2007
(73) Patentinhaber: TRIPLEX Kunststoffe GmbH, 72221 Haiterbach (DE); Hinrichs, Karl-Heinz, 8972 Ramsau/Dachstein (AT)
(72) Erfinder: Hinrichs, Karl-Heinz, Dipl.-Ing., A-8972 Ramsau/dachstein (AT)
(74) Vertreter: Maser, Jochen

(56) Entgegenhaltungen:
- EP-A- 0 018 824
- EP-A- 0 464 875
- EP-A- 0 516 280
- EP-A- 1 249 669
- US-A- 5 287 918

## Beschreibung

Die Erfindung betrifft eine neue Energieaustausch-Einrichtung, insbesondere Energie- bzw. Wärme-Abgabe und/oder-Aufnahme-Körper, vorzugsweise Heiz- und/oder Kühlkörper, Wand-, Boden-, Decken- und Geräte-Heiz- und/oder Kühlplatten u. dgl., Heiz- bzw. Kühlkörper, welche von einer Wärmetausch-Flüssigkeit durchströmt werden. Derartige Einrichtungen sind schon seit langem bekannt und dies in den verschiedensten Bauarten, mit den unterschiedlichsten Arten der Mediumsführung, mit den verschiedenartigsten Anschlüssen und Anschlussarten u. dgl.

Bekannt ist weiters, dass die Wärmetauschkörper üblicherweise aus gut wärmeleitfähigen Materialien, also früher aus Gusseisen und heute aus Stahl oder Aluminium, gefertigt sind.

Aus der EP 0 464 875 A2 ist ein Wärmetauscher bekannt, der aus zwei Wandplatten gebildet wird, deren Randseiten durch Schweißkleben miteinander verbunden werden. Diese Wandplatten weisen jeweils Vertiefungen auf, die beim Verbinden der beiden Wandplatten aneinander angrenzen und Führungsstege bilden. Dieses Dokument zeigt eine Wärmentausch-Einrichtung gemäß dem Oberbegriff des Anspruchs 1.

Aus der EP 1 249 669 A2 geht ein Wärmetauscher hervor, der nach dem Gegenstromprinzip arbeitet. Dieser Wärmetauscher weist eine Vielzahl von vertikal ausgerichteten Hohlkammerplatten auf, die parallel zueinander ausgerichtet und miteinander verbunden sind. Diese Hohlkammerplatten werden als einteilige extrudierte Platten hergestellt. Eine erste Platte verbleibt in ihrer ursprünglichen Form, und eine zweite Platte wird durch Zusammenfügen der beiden äußeren Wandabschnitte zur Herstellung einer Struktur miteinander verschweißt. Durch das Stapeln der beiden voneinander abweichenden Platten alternierend zueinander wird zwischen einer Außenseite einer unbearbeiteten Hohlkammerplatte und einer Außenseite einer bearbeiteten Hohlkammerplatte, bei der die beiden Wandabschnitte miteinander verbunden werden, ein Gasströmungskanal gebildet, so dass dieser Gasströmungskanal mit einem Gas In eine Richtung durchströmt wird und die benachbarte Hohlkammerplatte mit einem Medium in entgegengesetzter Richtung durchströmt wird. Ein solcher Aufbau eines Gegenstromwärmetauschers ist sehr aufwändig in der Herstellung.

Der Erfindung liegt die Aufgabe zugrunde, eine Wärmetausch-Einrichtung sowie ein Verfahren zur Herstellung einer Wärmetausch-Einrichtung zu schaffen, um eine einfache und kostengünstige Ausgestaltung und Herstellung von solchen Wärmetausch-Einrichtungen zu ermöglichen.

Diese Aufgabe wird durch eine Wärmetausch-Einrichtung gemäß den Merkmalen des Anspruchs 1 gelöst.

Es wurde nun gefunden, dass beim Einsatz von Dreischicht-Hohlkammerplatten aus einem thermopiastifizierbaren Kunststoff, der eine dreidimensionale skulptierte Mittelschicht mit einer Vielzahl von im Abstand zueinander angeordneten Stegen oder Erhebungen aufweist, welche von jeder Außenseite der Mittelschicht angeordnete Deckplatten auf Abstand hält, wobei der Führungssteg durch Aufwelchung und Verebnung der Stege oder Erhebungen der Mittelschicht und einem Materialschluss der beiden Deckplatten gebildet ist, zwischen der Zuführleitung und der Abführleitung für das Medium die Gleichmäßigkeit des Mediumdurchflusses für den Heiz- beziehungsweise Kühlkörper und damit der Heizleistung im Vergleich zum Einsatz von Dreischicht-Hohlkammerplatten ohne derartige übergeordnete Führung bemerkenswert verbessert wird.

Es wurde weiters überraschend gefunden, dass solche Heiz- und Kühlkörper keinesfalls unbedingt aus einem gut wärmeleitfähigem Material gebildet sein müssen, sondern dass bei entsprechender Bauart, bei welcher eine gute gleichmäßige Verteilung des Wärmetauschmediums innerhalb des Heiz- bzw. Kühlkörpers bzw. an dessen Wärrnetauschflachen gewährleistet ist, durchaus an Stelle von Metallen Kunststoffe für den Bau von Wärmetauschkörpern herangezogen werden können.

Weiters wurde gefunden, dass Innerhalb von sogenannten Dreischicht-Hohlkammerplatten aus einem therrnopfastifizierbaren Kunststoff ein fließfähiges Wärmetausch-Medium, also insbesondere Wasser, Glykol od. dgl, sehr gleichmäßig verteilbar sind und dass derartige Platten, die bisher für hochstabile Verpackungen benutzt wurden, sich hervorragen als Heiz- und auch als Kühlkörper eignen.

In eingehenden Versuchen mit den durch Einbringen eines einfachen Führungssteges oder einer einfachen Führungsstruktur für den Fluss des Wärmetauschmediums in der Mittelschicht verbesserten, aus einem thermoplastifizierbaren Kunststoff gefertigten Oreischicht-Hohlkammerplatten konnte eine beachtlich höhere Nutzleistung der damit ausgestatteten Heiz- und Kühlkörper erzielt werden. Besonders zu beachten ist hierbei die Einfachheit der Herstellung der neuen Kühlkörper mit ganz einfachen, beispielsweise im wesentlichen bloß etwa balkenförmigen elektrisch bzw. gasbeheizten Schweiß-Heizkörpern, in jeweils gewünschter Anordnung, mittels welcher die Seitenränder der Platten fluiddicht zugeschweißt und die Führungsstege für die übergeordnete Führung des Wärmetauschmediums in dieselben eingebracht werden können.

Die für die Heizung oder die Kühlung einzusetzenden Dreischicht-Hohlkammerplatten weisen bevorzugt im Inneren wechselweise nach beiden Seiten hin gerichtete kegeistumpfförmige Erhebungen auf, die materialschlüssig an den beiden Deckschichten vorgesehen sind. Es handelt sich um mittels einer dreidimensional gleichmäßig kleinteilig geformten, hügelartige, z. B. in einem Dreiecks-Raster angeordnete Erhöhungen und talartige Vertiefungen aufweisenden Mittelschicht miteinander verbundene Deckplatten, wobei zwischen den Erhebungen und Vertiefungen das Wärmetauschmedium gleichmäßig verteilt durchströmen kann.

Im Rahmen der Erfindung besonders bevorzugt ist der Einsatz von Platten, welche sich durch hohe mechanische Stabilität und gleichmäßige Qualität der Bindung der dreidimensionalen Mittelschicht an die beiden Deckschichten auszeichnen.

Die Dreischicht-Hohlkammerplatten sind bevorzugterweise aus einem wärme-, licht-, und/oder witterungsbeständigen Kunststoff gefertigt

Eine Steigerung der Effektivität der neuen Heiz- oder Kühlkörper kann durch Einbau von Metallpulvern oder -fasern in den Kunststoff erzielt werden. Als Metalle kommen insbesondere Kupfer oder Aluminium in Frage.

Ein heute nicht hoch genug einzuschätzender Vorteil des neuartigen Einsatzes von Dreischicht-Hohlkammerplatten besteht in der besonderen Einfachheit der Fertigung der neuen Heiz- bzw. Kühlplatten, welche einerseits in jeglicher, eben auch phantasievoller Gestalt, geformt werden können, wenn nur die Ränder auf einfache Weise zugeschweißt sind und sich andererseits darin, dass diese Platten in Folge ihrer hohen mechanischen Stabilität unter Umständen gleich selbst als heizbare Wandelemente oder als hocheffektive tragende Heizplatten für den Einbau in Fußböden besonders geeignet sind.

Die in die Deckplatten eingearbeiteten Führungsstege sind bevorzugt für die übergeordnete Führung des Wärmetauschmediums innerhalb der Dreischicht-Hohlkammerplatten in Form einfach anzubringender Schweißnähte bzw. schweißnahtähnlicher Barrieren vorgesehen.

Bevorzugte Dimensions-Verhältnisse zwischen den Abständen der Führungsstege von den Seitenrändern od. dgl. und der Breite des führungssteglosen DurchflussesInnerhalb der Dreischicht- Hohlkammerplatte liegen beispielsweise darin, dass die Durchflussstrecke, die für das Wärmemedium Wm eine Breite Bs aufweist, welche dem 0,5- bis 2-fachen für den Durchfluss des Wärmemediums zur Verfügung stehenden Durchflussbreite b_{F} entspricht. Die Breite b_{F} liegt zwischen einem der ebenfalls durch Schweißung geschlossenen Ränder der Dreischicht-Hohlkammerplatte und dem jeweils Seitenrand nächsten Führungssteg beziehungsweise zwischen zwei einander benachbarten Führungsstegen der Hohlkammerplatte.

Die Anordnung von mehreren Führungsstegen für den Fall von Heiz- bzw. Kühlkörpern mit größeren Heizflächen, wie sie für Heizwände oder Fußboden-Heizmatten anzuwenden sind, ist bevorzugt derart vorgesehen, dass die Führungsstege jeweils abwechselnd von einem der einander gegenüberliegenden Seitenränder der Dreischichtplatte sich bis zum gegenüberliegenden Seitenrand unter Freilassung der Durchflussstrecke Ds erstreckt.

Eine vorteilhafte Art des Anschlusses der neuen Heizkörper an die Wärmetauschmediums-Zuführungs- und Abführungsleitungen, ist durch eine Anschlussplatte gegeben, bei der die Anschlussstutzen ebenfalls durch einfaches Niedrigtemperatur-Schweißen von einem der Seitenränder oder von einer der Hauptflächen bzw. Deckplatten her in die Dreischicht-Hohlkammerplatten eingebunden werden können.

Die Erfindung wird anhand der Zeichnung näher erläutert:

Es zeigen Figur 1a und 1b zwei plattenförmige Heizkörper gemäß der Erfindung mit unterschiedlichen Anschlüssen an die Heizmediumsleitungen, die Fig. 2 einen Schnitt durch einen plattenförmigen Heizkörper mit Führungssteg, die Fig. 3 einen Heizkörper mit drei Führungsstegen, die Fig. 4 eine auf einen Unterboden auflegbare Heizmatte, in Draufsicht, die Fig. 5 das Schema der Verlegung einer Mehrzahl von derartigen Bodenheizmatten gemäß der Erfindung, die Fig. 6 wieder einen gewöhnlichen plattenförmigen Heizkörper mit diagonal angeordneten Anschlüssen für das Heizmedium und Mittel-Führungssteg, die Fig. 7 eine bevorzugte Ausführungsform von Anschlüssen an den Seitenrändern von Dretschicht-Hohlkammerplatten für die Zuführung von Wärmetauschmedium in den neuen Helz- bzw. Kühlkörper und die Fig. 8a und 8b zwei Darstellungen einer originalen "Triplex"-Platte, wie sie bevorzugt eingesetzt wird.

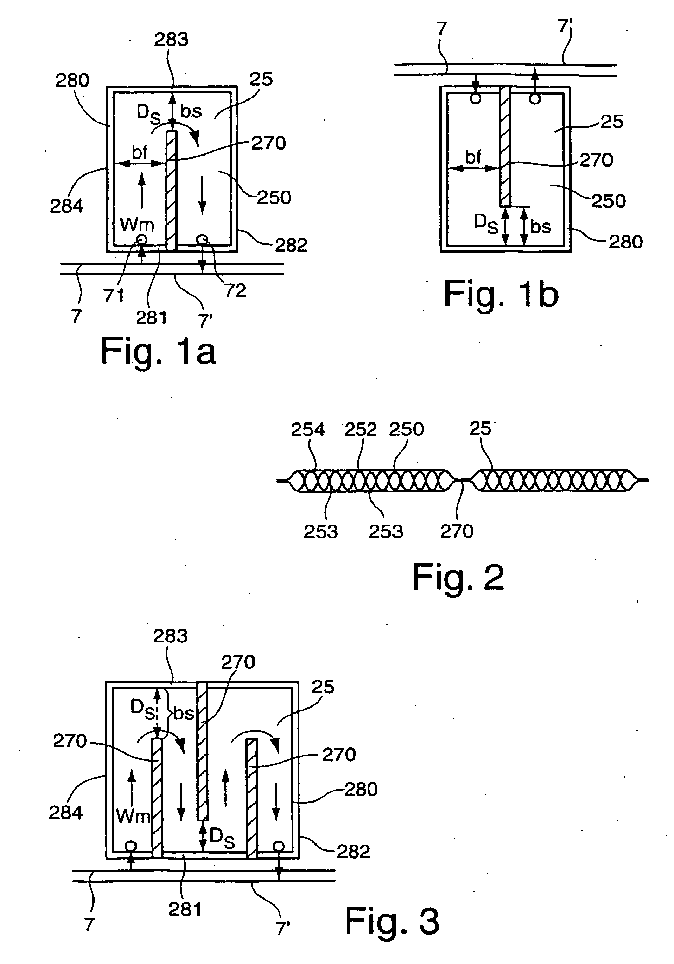

Die mit einer Dreischlcht-Hohlkammerplatte 250 gebildeten Heizkörper 25 gemäß den Fig. 1a und 1b sind einmal unterseitig und einmal oberseitig mit der Zuleitung 7 und mit der Ableitung 7' für das Wärmetauschmedium ausgebildet. Die Platten 250 weisen rundum an ihren seitlichen Rändern 281, 282, 283 und 284 eine hier durchgehende Verschweißung 280 auf, so wie jeweils Zu- und Ablauf 71 und 72 von der vorderen Deckplatte 252.

Mittig ist jeweils zwischen Zulauf 71 und Ablauf 72 für das Wärmetauschmedium Wm ein durch Kunststoff-Schweißung hergestellter geradliniger Führungssteg 270 für eine übergeordnete Invers-U- bzw. U-Führung des Wärmetauschmediums Wm vorgesehen. Der Führungssteg 270 beginnt gleich am unteren Seitenrand 281 bzw. ist an den oberen Seitenrand 283 des plattenförmigen Heizkörpers 25 anschließend angeordnet und endet vor Erreichung des jeweils gegenüberliegenden ebenfalls verschweißten Seitenrand 283 bzw. 281 im Abstand bs, welcher etwa der Fließbreite bf des Mediums Wm zwischen geschweißtem Führungssteg 270 und jeweiligem Seitenrand 282, 284 entspricht, womit eine Durchflussstrecke Ds für das Wärmetauschmedium gebildet ist.

Die Fig. 2 zeigt - bei sonst gleichbleibenden Bezugszeichenbedeutungen - einen neuen plattenförmigen Heiz- bzw. Kühlkörper 25 im Schnitt mit den beiden Deckschichten 252, 253 und der mit denselben eigenmaterialschlüssig verbundenen, Erhebungen und Vertiefungen 255 aufweisenden Mittelschicht 254 sowie dem mittigen, durch die vorher geschilderte Verschweißung der beiden Deckplatten 252, 253 unter thermischer Verdrängung der Mittelschicht 254 an dieser Stelle gebildeten Führungssteg 270.

Die Fig. 3 zeigt - bei sonst gleichbleibenden Bezugszeichenbedeutungen - einen neuen Helz- bzw. Kühlkörper 25 mit drei abwechselnd jeweils von den Seitenrändern 281, 283 ausgehenden Führungsstegen 270, wobei darauf zu achten ist, dass jeweils die dem Wärmetauschmediums-Zulauf 71 und dem Ablauf 72 nächsten Führungsstege 270 von jenem Seitenrand 281 ausgehen, in dessen Nähe sich der Zulauf 71 bzw. der Ablauf 72 für das Wärmetauschmedium Wm befindet.

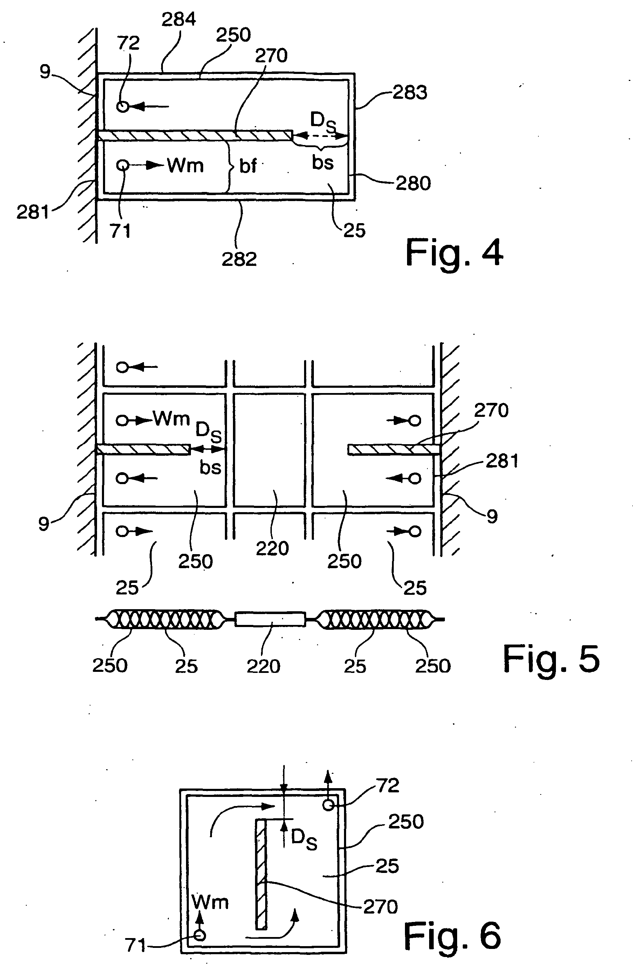

Die Fig. 4 zeigt - bei sonst gleichbleibenden Bezugszeichenbedeutungen - eine mit dem Seitenrand 281 entlang einer Wand 9 angeordnete auf einem Boden aufliegende Bodenheizmatte 25.

Die Fig. 5 zeigt - bei sonst gleichbleibenden Bezugszeichenbedeutungen - eine vorteilhafte Anordnung von Bodenheizmatten 25 gemäß der Erfindung, wobei die hier nicht dargestellten Heizmediums-Zuführungen und -abführungen jeweils in oder entlang der Wände 9 geführt sind. Hier gehen die Heizmatten 25 jeweils von den beiden Wänden 9 aus, wobei sie in der Mitte des Raumes nicht zusammenstoßen, sondern dort in der Mitte nicht vom Wärmetauschmedium durchflossene, gleiche Dicke wie die Heizmatten 25 aufweisende Neutral- bzw. Blindplatten 220 angeordnet sind. Es wurde gefunden, dass für eine gleichmäßige und als angenehm empfundene Heizung von Räumen der mittlere Bereich des Raumes nicht mitgeheizt werden muss und daher dort die Neutral- bzw. Blindplatten 220 angeordnet werden können.

Die Fig. 6 zeigt - bei sonst gleichbleibenden Bezugszeichenbedeutungen - eine Heizplatte 25 mit diagonal angeordneten Anschlüssen 71, 72 für Zu- und Ablauf des Wärmetauschmediums Wm. Hier ist eine beidseitig nicht bis zu den Rändern 281, 283 sich erstreckender, also auf beiden Seiten eine Durchflusssbecke Ds freilassender Mittel-Führungssteg 270 ausgebildet, wodurch eine besonders gleichmäßige Verteilung des Wärmetausch-Mediums Wm innerhalb des Heizkörpers 25 bzw. innerhalb der ihn bildenden Dreischicht-Hohlraumplatte 250 sichergestellt ist.

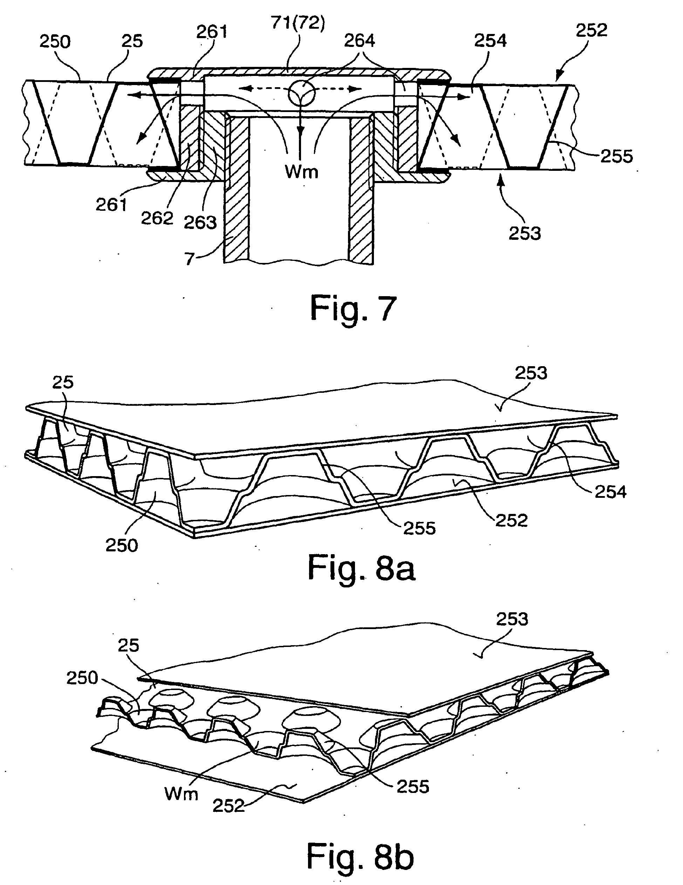

Die Fig. 7 zeigt - bei sonst gleichbleibenden Bezugszeichenbedeutungen - eine vorteilhafte Ausführungsform eines Anschlusses 71 einer Wärmetauschmedium-Zuführungsleitung 7 an bzw. in zwei benachbarte erfindungsgemäß eingesetzte Heizmatten 25 aus Dreischicht-Hohlraumplatten 250.

Der Anschluss 71 umfasst zwei außen an die Energiematten bzw. -platten anlegbare Abschlussplatten 261 aufweisende, ineinander schraubbare Anschlussnippel 262, 263, von welchen der innen einschraubbare Nippel 263 kürzer ist als der andere Nippel 262 und derselbe dort, wo keine Ineinanderschraubung vorhanden ist, eine Mehrzahl von Durchflussöffnungen 164 für das Wärmeträgermedium Wm in das Innere der Dreischicht-Hohlraumplatte aufweist.

Die Fig. 8a und 8b zeigen - bei sonst gleichbleibenden Bezugszeichenbedeutungen - zwei fotografische Darstellungen einer konkreten Dreischicht-Hohlraumplatte (250) gemäß Triplex-Technologie ("Triplex-Platte").

## Patentansprüche

1. Wärmetausch-Einrichtung, insbesondere Wärme-Abgabe- und/oder -aufnahmekörper, mit einem Wärmetauschkörper (25), der Anschlüsse (71, 72) für eine Wärmetauschmediums-Zu- und - abführung aufweist, mit einer Durchflussstrecke (Ds) zwischen den Anschlüssen (71, 72) für das Wärmetauschmedium (Wm), welche durch zumindest einen Führungssteg (270) gebildet ist, **dadurch gekennzeichnet,**
- **dass** der Wärmetauschkörper (25) aus einer Dreischicht-Hohlkammerplatte (250) aus einem thermoplastifizierbaren Kunststoff besteht, welche eine dreidimensional skulptierte Mittelschicht (255) mit einer Vielzahl von im Abstand zueinander angeordneten Stegen oder Erhebungen (254) aufweist, durch welche von jeder Außenseite der Mittelschicht (255) angeordnete Deckplatten (252, 253) auf Abstand gehalten sind und,
- dass der Führungsstege (270) durch Aufweichung und Verebnung der Stege ader Erhebungen (254) der Mittelschicht (255) und einem Materialschluss der beiden Deckplatten (252, 253) gebildet ist.

2. Wärmetausch-Einrichtung nach Anspruch 1, **dadurch gekennzeichnet, dass** der Materialschluss durch Schweißung gebildet ist.

3. Wärmetausch-Einrichtung nach Anspruch 1 oder 2,**dadurch gekennzeichnet, dass** der Wärmetauschkörper (25) im Inneren wechselweise nach beiden Seiten hin gerichtete kegeistumpflörmige Erhebungen (254) aufweist, die materialschlüssig an den beiden Deckplatten (252, 253) vorgesehen sind.

4. Wärmetausch-Einrichtung nach einem der vorhergehenden Ansprüche, **dadurch gekennzeichnet, dass** eine der Deckplatten (252, 253) mit einer zur Wand oder zum Boden hin gewandten Wärmedämmschicht auf der Basis eines Isoliermaterials und/oder einer Reflexionsschicht, insbesondere auf Metall-Basis, versehen ist.

5. Warmetausch-Einrichtung nach einem der vorhergehenden Ansprüche, **dadurch gekennzeichnet, dass** die Mittelschicht (250) aus einer zweiseitigen Noppen-Innenschicht gebildet ist.

6. Wärmetausch-Einrichtung nach einem der Ansprüche 1 bis 4, **dadurch gekennzeichnet, dass** die Dreischicht-Hohlkammerplatte (250) aus einemwärme-, licht- und/oder witterungsbeständigen Kunststoff gebildet und an ihren ursprünglich offenen Seitenrändem (281 bis 284) durch Klebung oder Schweißung fluidmediumsdicht geschlossen ist.

7. Wärmetausch-Einrichtung nach einem der Ansprüche 1 bis 6, **dadurch gekennzeichnet, dass** zumindest eine der Deckplatten (252, 253) der Dreischicht-Hohlkammerplatte (250) mit einem, mit dem Kunststoffmaterial der Mittelschicht (254) kompatiblen, jedoch mit einem Metall oder einem anderen Wärmeleitmaterial gefüllten Kunststoffmaterial ausgebildet ist.

8. Wärmetausch-Einrichtung nach einem der Ansprüche 1 bis 7, **dadurch gekennzeichnet, dass** die geradlinig verlaufenden Führungsstege (270) mittels durchgehender, die beiden Deckplatten (252, 253) der Dreischicht-Hohlkammerplatte (250) unter thermisch unterstützter Verdrängung und Einebnung der Erhebungen (254) der Mittelschicht (255) miteinander fluiddicht durch eine Schweißnaht verbunden sind.

9. Wärmetausch-Einrichtung nach einem der Ansprüche 1 bis 8, **dadurch gekennzeichnet,dass** die Durchflussstrecke (Ds) für das Wärmetauschmedium (Wm) eine Breite (bs) aufweist, welche dem 0,5-bis 2-fachen der dem Durchfluss des Wärmetauschmediums (Wm) zur Verfügung stehenden Durchflussbreite (bf) zwischen einem der ebenfalls durch Schweißung geschlossenen Ränder (281 bis 284) der Dreischicht-Hohlkammerplatte (250) und dem jeweils seitenrandnächsten Führungssteg (270) entspricht beziehungsweise zwischen zwei einander benachbarten Führungsstegen (270) der Dreischicht-Hohlkanimerplatte (250) entspricht.

10. Wärmetausch-Einrichtung nach einem der Ansprüche 1 bis 9, **dadurch gekennzeichnet, dass** die Dreischlcht-Hohlkammerplatte (250) mehrere Führungsstege (270) aufweist, die jeweils abwechselnd von einem der einander gegenüberliegenden Seitenränder (281, 283; 282, 284) der Dreischicht-Hohikammerplatte (250) sich bis zum gegenüberllegenden Seitenrand unter Freilassung der Durchflussstrecke (Ds) erstrecken,

11. Wärmetausch-Einrichtung nach einem der Ansprüche 1 bis 8, **dadurch gekennzeichnet, dass** der Zuführungs- und Abführungs-Anschluss (71, 72) auf der gleichen Seite der Dreischicht-Hohlkammerplatte (250) angeordnet sind und jeweils die gleiche Deckplatte (252 oder 253) durchsetzen.

12. Wärmetausch-Einrichtung nach einem der Ansprüche 1 bis 11, **dadurch gekennzeichnet, dass** die Anschlüsse (71, 72) für den Zu- und Ablauf des Wärmetauschmediums (Wm) zwei Anschlussplatten (261) aufweisen, die außen an zwei einander benachbart angeordneten Dreischicht-Hohlkammerplatten (250) anliegen und an deren jeweiligen Seitenränder beziehungsweise Seitenrand-Verschweißungen durchdringende, Ineinander schraubbbare Anschlussnippel (262, 263) vorgesehen sind, von welchen der innen einschraubbare Nippel (263) kürzer ist als der andere Nippel (262) und derselbe dort, wo keine Ineinanderschraubung vorhanden ist, eine Mehrzahl von in einem Raum zwischen den Deckplatten (252, 253) führende Durchflussöffnungen (264) für das Wärmetauschmedium (Wm) aufweist.

13. Wärmetausch-Einrichtung nach Anspruch 1, **dadurch gekennzeichnet, dass** der Führungssteg als ein geradliniger, an eine der Seitenrand-Verschweißung anschließender Führungssteg (270) ausgebildet ist, der zur jeweils gegenüberliegenden Seitenrand-Verschweißung hin gerichtet ist, jedoch davor in einem Abstand endet.

## Claims

1. Heat-exchange device, in particular heat dissipating and/or absorbing body, having a heat-exchange body (25), which has connections (71, 72) for a heat-exchange medium feed and discharge, having a through-flow section (Ds) between the connections (71, 72) for the heat-exchange medium (Wm) which is formed by at least one guide web (270), **characterised in that**
- the heat-exchange body (25) comprises a three-layer hollow-chamber plate (250) made from a thermoplastifiable plastic which has a three-dimensionally sculptured middle layer (255) with a multiplicity of webs or raised projections (254) arranged at a distance from one another, by means of which cover plates (252, 253), which are arranged on each outer side of the middle layer (255), are held apart, and
- the guide web (270) is formed by a softening and flattening of the webs or raised projections (254) of the middle layer (255) and a connecting of the material of the two cover plates (252, 253).

2. Heat-exchange device according to Claim 1, **characterised in that** the material connection is formed by welding.

3. Heat-exchange device according to Claim 1 or 2, **characterised in that**, in its interior, the heat-exchange body (25) has raised projections (254) which are in the form of truncated cones oriented alternately towards both sides and are provided in a materially bonded manner on the two cover plates (252, 253).

4. Heat-exchange device according to one of the preceding claims, **characterised in that** one of the cover plates (252, 253) is provided with a heat insulating layer based on an insulating material and/or a reflection layer, in particular metal-based, which faces the wall or floor.

5. Heat-exchange device according to one of the preceding claims, **characterised in that** the middle layer (250) is formed from a double-sided studded inner layer.

6. Heat-exchange device according to one of Claims 1 to 4, **characterised in that** the three-layer hollow-chamber plate (250) is made from a heat-resistant, light-resistant and/or weather-resistant plastic and is sealed against fluid media on its originally open lateral edges (281 to 284) by glueing or welding.

7. Heat-exchange device according to one of Claims 1 to 6, **characterised in that** at least one of the cover plates (252, 253) of the three-layer hollow-chamber plate (250) is formed by a plastic material which is compatible with the plastic material of the middle layer (254) but is filled with a metal or some other heat-conducting material.

8. Heat-exchange device according to one of Claims 1 to 7, **characterised in that** the straight guide webs (270) are formed by a continuous weld which joins the two cover plates (252, 253) of the three-layer hollow-chamber plate (250) to one another in a fluid-tight manner while displacing and flattening the raised projections (254) of the middle layer (255) with the assistance of heat.

9. Heat-exchange device according to one of Claims 1 to 8, **characterised in that** the through-flow section (Ds) for the heat-exchange medium (Wm) has a width (bs) which is equal to 0.5 to 2 times the through-flow width (bf) available for the flow of heat-exchange medium (Wm) between one of the edges (281 to 284) of the three-layer hollow-chamber plate (250), which is likewise sealed by welding, and the respective guide web (270) nearest to the lateral edge, or between two adjacent guide webs (270) of the three-layer hollow-chamber plate (250).

10. Heat-exchange device according to one of Claims 1 to 9, **characterised in that** the three-layer hollow-chamber plate (250) has a plurality of guide webs (270) which in each case extend alternately from one of the mutually opposing lateral edges (281, 283; 282, 284) of the three-layer hollow-chamber plate (250) to the opposite lateral edge while leaving the through-flow section (Ds) free.

11. Heat-exchange device according to one of Claims 1 to 8, **characterised in that** the feed and discharge connections (71, 72) are arranged on the same side of the three-layer hollow-chamber plate (250) and each pass through the same cover plate (252 or 253).

12. Heat-exchange device according to one of Claims 1 to 11, **characterised in that** the connections (71, 72) for the feed and discharge of the heat-exchange medium (Wm) have two connecting plates (261) which rest against the outside of two adjacent three-layer hollow-chamber plates (250), and penetrating connecting nipples (262, 263) which can be screwed inside one another are provided on their respective lateral edges or lateral edge welds, of which the inner screw-in nipple (263) is shorter than the other nipple (262), and the latter, where no screw-in facility is provided, has a plurality of through-flow openings (264) for the heat-exchange medium (Wm) which lead into a space between the cover plates (252, 253).

13. Heat-exchange device according to Claim 1, **characterised in that** the guide web is in the form of a straight guide web (270) which connects to a lateral edge weld and is oriented towards the respectively opposite lateral edge weld but ends at a distance there from.

## Revendications

1. Échangeur thermique, plus particulièrement corps de réduction et/ou d'absorption de chaleur, avec un corps d'échange thermique (25), qui comporte des raccords (71, 72) pour le retrait et le raccordement d'un support d'échange thermique, avec une section d'écoulement (Ds) située entre les raccords (71, 72) prévus pour le support d'échange thermique (Wm), laquelle est formée par au moins une tige de guidage (270), **caractérisé en ce que**
- le corps d'échange thermique (25) se compose d'une plaque de chambre creuse à trois couches (250) en plastique pouvant être thermoplastifiée, laquelle comporte une couche médiane sculptée en trois dimensions (255) avec une pluralité de tiges et d'élévations (254) éloignées les unes des autres, par lesquelles les plaques de couverture (252, 253) disposées sur chaque face externe de la couche médiane (255) sont maintenues à distance l'une de l'autre et,
- la tige de guidage (270) est formée par l'assouplissement et l'aplanissement des tiges ou des élévations (254) de la couche médiane (255) et de la fermeture du matériau des deux plaques de couverture (252, 253).

2. Échangeur thermique selon la revendication 1, **caractérisé en ce que** la fermeture du matériau est formée par une soudure.

3. Échangeur thermique selon la revendication 1 ou 2, **caractérisé en ce que** le corps d'échange thermique (25) comporte des élévations (254) à cône tronqué situées à l'intérieur et orientées alternativement des deux côtés, lesquelles sont prévues au niveau des deux plaques de couvertures (252, 253) pour la fermeture du matériau.

4. Échangeur thermique selon l'une quelconque des revendications précédentes, **caractérisé en ce que** l'une des plaques de couverture (252, 253) est prévue avec une couche thermo-isolante appliquée sur la paroi ou sur le fond, sur la base d'un matériau isolant et/ou d'une couche réflectrice, plus particulièrement sur une base en métal.

5. Échangeur thermique selon l'une quelconque des revendications précédentes, **caractérisé en ce que** la couche médiane (250) est formée d'une couche interne à bosses des deux côtés.

6. Échangeur thermique selon l'une quelconque des revendications 1 à 4, **caractérisé en ce que** la plaque à chambre creuse à trois couches (250) est formée en plastique résistant à la chaleur, à la lumière et aux intempéries et est fermée hermétiquement par un collage ou une soudure au niveau des bords latéraux ouverts à l'origine (281 à 284).

7. Échangeur thermique selon l'une quelconque des revendications 1 à 6, **caractérisé en ce que** au moins une des plaques de couverture (252, 253) de la plaque de chambre creuse à trois couches (250) est formée avec un matériau en plastique toutefois rempli de métal ou d'un autre matériau conducteur de chaleur compatible avec le matériau plastique de la couche médiane (254).

8. Échangeur thermique selon l'une quelconque des revendications 1 à 7, **caractérisé en ce que** les tiges de guidage rectilignes (270) sont reliées hermétiquement les unes aux autres par une soudure au moyen du déplacement thermique continu des deux plaques de couverture (252, 253) de la plaque de chambre creuse à trois couche (250) et de l'aplanissement des élévations (254) de la couche médiane (255).

9. Échangeur thermique selon l'une quelconque des revendications 1 à 8, **caractérisé en ce que** la section d'écoulement (Ds) prévue pour le support d'échange thermique (Wm) comporte une largeur (bs), laquelle correspond à 0,5 à 2 fois la largeur d'écoulement (bf) disponible de l'écoulement du support d'échange thermique (Wm), entre un des bords (281 à 284) fermés également par une soudure de la plaque de chambre creuse à trois couches (250) et la tige de guidage (270) suivante située respectivement sur le bord latéral, ou entre deux tiges de guidage (270) adjacentes de la plaque de chambre creuse à trois couches (250).

10. Échangeur thermique selon l'une quelconque des revendications 1 à 9, **caractérisé en ce que** la plaque de chambre creuse à trois couches (250) comporte plusieurs tiges de guidage (270), lesquelles s'étendent alternativement de l'un des bords latéraux opposés (281, 283 ; 282, 284) de la plaque de chambre creuse à trois couches (250) à un bord latéral opposé avec la section d'écoulement (Ds) ouverte.

11. Échangeur thermique selon l'une quelconque des revendications 1 à 8, **caractérisé en ce que** les raccords pour le retrait et le raccordement (71, 72) sont disposés sur le même côté de la plaque de chambre creuse à trois couches (250) et traversent la même plaque de couverture (252 ou 253).

12. Échangeur thermique selon l'une quelconque des revendications 1 à 11, **caractérisé en ce que** les raccords (71, 72) pour le retrait et le raccordement du support d'échange thermique (Wm) comportent deux embases (261), lesquelles se situent à l'extérieur au niveau de deux plaques de chambre creuse à trois couches (250) disposées l'une à côté de l'autre et au niveau des bords latéraux ou des soudures de bords latéraux respectifs desquelles des écrous-raccords (262, 263) pénétrants et pouvant être vissés l'un dans l'autre sont prévus, parmi lesquels le raccord pouvant être vissé à l'intérieur (263) est plus court que l'autre raccord (262) et, là où il n'existe pas de vissage à l'intérieur, une pluralité d'ouvertures d'écoulement (264) s'écoulant dans un espace situé entre les plaques de couverture (252, 253) sont prévues pour le support d'échange thermique (Wm).

13. Échangeur thermique selon la revendication 1, **caractérisé en ce que** la tige de guidage est formée comme une tige de guidage (270) rectiligne fermée au niveau d'une soudure d'un bord latéral, laquelle tige est orientée vers la soudure de bord latéral opposée respective et se termine toutefois avant un espace libre.
